# EUROPÄISCHE PATENTANMELDUNG

(11) **EP 2 819 077 A1**
(43) Veröffentlichungstag der Anmeldung: **31.12.2014**
(21) Anmeldenummer: 13174370.0
(22) Anmeldetag: 28.06.2013
(51) Int. Cl.: G06Q 20/32, G06Q 20/40, G06F 21/35

(54) **Verfahren zum Freischalten mindestens eines Dienstes im E-Wallet**

(71) Anmelder: Nexperts GmbH, 4232 Hagenberg im Mühlkreis (AT)
(72) Erfinder: Schmid, Kurt, 4030 Linz (AT)
(74) Vertreter: Jell, Friedrich

(57) **Zusammenfassung**

Es wird ein Verfahren zum Freischalten eines Dienstes 3 für kontaktlose Bezahlvor-gänge im E-Wallet 6 eines mobilen Endgeräts 2 gezeigt. Um Benutzungsbedenken hinsichtlich der Sicherheit zu überwinden, wird erfindungsgemäß vorgeschlagen, dass Personalisierung und/oder Provisionierung der Dienstapplikation 12 erst nach erfolgreicher Authentifizierung des Benutzers erfolgt, und zwar durch den Server 30, der den Benutzer auf Identität überprüft hat. Zudem muss diese Authentifizierung über Daten erfolgen, die von einem Secure-Element 30, stammen.

## Beschreibung

Die Erfindung betrifft ein Verfahren zum Freischalten mindestens eines Dienstes im E-Wallet, ausgeführt auf einem mobilen Endgerät, für eine kontaktlose Transaktion, insbesondere einen kontaktlosen Bezahlvorgang, wobei das mobile Endgerät eine NFC-Einrichtung, ein erstes Secure-Element und das E-Wallet aufweist, dessen Dienst zumindest auf eine Dienstapplikation im Secure-Element zugreift.

Durch RFID (Radio Frequency IDentification) und NFC (Near Field Communication) im speziellen sind kontaktlose Transaktionen, insbesondere kontaktlose Bezahlvorgänge, bekannt. So beschreibt WO2005079254A2 ein E-Wallet (elektronische Geldbörse) in einem mobilen Endgerät. Dabei wird ein von einem Server personalisiertes E-Wallet vom Benutzer am mobilen Endgerät installiert und dann freigeschaltet. Nachteilig ist, dass die Übertragung des Downloadlinks und des Aktivierungscodes über dasselbe Medium, zum Beispiel mittels SMS an das mobile Endgerät, zu erfolgen hat. Dies vergrößert die Gefahr der Aktivierung durch einen unrechtmäßigen Nutzer erheblich. Weitere Nachteile des Verfahrens bestehen darin, dass das E-Wallet nur für einen einzelnen Bezahldienst konfigurierbar ist. Dementsprechend muss für jeden gewünschten Bezahldienst ein eigenes E-Wallet personalisiert und installiert werden. Zudem muss die Bereitstellung des E-Wallet vom Server initiiert werden, um die sichere Verteilung und Zuordnung zum jeweiligen Benutzer zu gewährleisten.

Der Erfindung liegt somit die Aufgabe zugrunde, ausgehend vom eingangs geschilderten Stand der Technik ein Verfahren zum Freischalten von Diensten im E-Wallet eines mobilen Endgeräts zu schaffen, bei dem der Benutzer die Freischaltung des Dienstes für kontaktlose Transaktionen initiiert, um so mehrere Dienste in einem E-Wallet zu ermöglichen, ohne jedoch die Sicherheit damit zu gefährden. Da das Verfahren zum Freischalten von Diensten, die unterer anderem Bezahlvorgänge umfassen können, geeignet sein soll, muss das Verfahren insbesondere eine zuverlässige und gegen Manipulation geschützte Authentifizierung des Benutzers gewährleisten.

Die Erfindung löst die gestellte Aufgabe dadurch, dass das Verfahren zumindest folgende Schritte umfasst:
- Anzeige mindestens eines zur Verfügung stehenden Dienstes im E-Wallet,
- Auswahl eines Dienstes durch den Benutzer und Übermittlung der Auswahl an einen Server, der mit dem mobilen Endgerät über dir Mobilfunkschnittstelle verbunden ist,
- Authentifizieren des Benutzers des mobile Endgeräts über ein Secure-Element nach Auswahl des Dienstes,
- Übertragung der Authentifizierungsdaten des Benutzers an den Server,
- Überprüfen der empfangenen Authentifizierungsdaten am Server um die Identität des Benutzers zu validieren,
- Personalisierung und/oder Provisionierung der Dienstapplikation im ersten Secure-Element des mobilen Endgeräts für den Benutzer durch den Server, um den Dienst im E-Wallet freizuschalten.

Bietet das E-Wallet die Möglichkeit, dem Benutzer die zur Verfügung stehenden Dienste anzuzeigen, kann ein Benutzer zwischen verschiedensten Diensten auswählen. Diese Auswahl kann dann in bekanntere Weise an einen Server, der mit dem mobilen Endgerät über die Mobilfunkschnittstelle verbunden ist, übermittelt werden, sodass der Benutzer auf einfache und auch in gewohnter Weise das Freischalten des gewünschten Dienstes initiieren kann. Dies kann die Handhabbarkeit des Verfahrens zur Freischaltung deutlich erhöhen. Um jedoch dennoch hohen Sicherheitsstandards zu genügen, wird vorgeschlagen, dass sich der Benutzer authentifiziert, nämlich mit einem Secure-Element. In einem weiteren Schritt werden dann die Authentifizierungsdaten des Benutzers an den Server übertragen und die empfangenen Authentifizierungsdaten am Server überprüft, um die Identität des Benutzers zu validieren. Nach einer erfolgreichen Validierung des Benutzers erfolgt in einem weiteren Schritt eine Personalisierung und/oder Provisionierung der Dienstapplikation im ersten Secure-Element des mobilen Endgeräts für den Benutzer durch den Server. Damit können mehrere Dienste in einem E-Wallet auf sichere Weise freigeschaltet werden, weil diese durch den Server sicher einem authentifizierten Benutzer zugeordnet werden können. Diese Personalisierung und/oder Provisionierung ist im Allgemeinen die Zuordnung einer Identität zu der Dienstapplikation im Secure-Element. Diese Zuordnung erfolgt üblicherweise durch Einbringen eines geheimen und daher nur dem zu authentisierenden Benutzer zuordenbaren Objekts. Dieses Objekt kann beispielsweise ein geheimer Schlüssel für kryptografische Operationen aber auch ein auf dem Secure-Element generiertes asymmetrisches Schlüssel paar sein. Gegenüber dem Stand der Technik kann so ein einfach zu handhabendes Verfahren zum Freischalten von Bezahldiensten im E-Wallet ermöglicht werden, was auch höchsten Sicherheitsanforderungen genügen kann.

Vorteilhafte physikalische Implementierungen des ersten Secure-Elements können die SIM-Karte des mobilen Endgeräts, eine in das mobile Endgerät eingesteckte uSD Karte oder ein integrierter Schaltkreis, der Bestandteil des mobilen Endgeräts ist, sein. Diese Implementierungen des Secure-Elements können den Zugang zu den auf dem Secure-Element freigeschalteten Diensten über ein Geheimnis, zum Beispiel eine PIN, reglementieren und dadurch besondere Sicherheit bieten.

Die Aufforderung zur Authentisierung kann über das E-Wallet des mobilen Endgeräts erfolgen. Es ist aber auch ein Verfahren vorstellbar, bei dem Aufforderung zur Authentisierung vom Server ausgeht. Wird vom Server die Aufforderung zur Authentisierung an das mobile Endgerät gesendet, sich über die NFC-Einrichtung des mobilen Endgeräts mit einem zweiten, vom mobilen Endgerät unabhängigem Secure-Element zu authentifizieren, kann dies die hohen Sicherheitsanforderungen dahin gehend abdecken, dass die Initiierung des Authentisierungsvorgangs von einem externen Gerät, nämlich dem Server, erfolgt.

Wird die Funktion des Dienstes durch eine Angebotsbeschreibung auf dem mobilen Endgerät dem Benutzer visualisiert, kann dies die verbesserte Handhabung der Initiierung der Dienstanforderung durch den Benutzer darstellen und den Vorgang der Dienstauswahl erleichtern.

Wird bei der Authentifizierung des Benutzers der ausgewählte Dienst signiert, kann dies noch einmal die Sicherheit des Verfahrens erhöhen. Durch die Signatur kann explizit bestätigt werden, dass der Benutzer wirklich den signierten Dienst ausgewählt hat und sich für dessen Freischaltung authentifiziert.

Um die Sicherheit erheblich zu erhöhen, wird außerdem vorgeschlagen, dass die Authentifizierung des Benutzers eine Aufforderung an den Benutzer, sich über die NFC-Einrichtung des mobilen Endgeräts mit einem zweiten, vom mobilen Endgerät unabhängigem Secure-Element zu authentifizieren, aufweist. Wird die Authentisierung nämlich mittels einem zweiten, vom mobilen Endgerät unabhängigem Secure-Element durchgeführt, kann dies durch die physikalische Trennung zwischen Mobiltelefon und zweitem Secure-Element besondere Sicherheit gewährleisten.

Im Allgemeinen wird festgehalten, dass unter einem Dienst im E-Wallet, eine Einrichtung zur Ausführung von Transaktionen über die NFC-Einrichtung für beispielsweise kontaktlose Bezahlvorgänge mit dem mobilen Endgerät verstanden werden kann. Dabei ist zur Ausführung der jeweiligen Transaktion, zumindest eine zugehörige Dienstapplikation in zumindest einem Secure-Element des mobilen Endgeräts erforderlich. So kann der Dienst beispielsweise der Funktion einer Kreditkarte, wie einer Visa- oder Mastercard, entsprechen. Für den Fachmann ist jedoch naheliegend, dass sich dieses Konzept nicht nur auf spezielle Kreditkarten beschränkt, sondern auch andere Möglichkeiten der Bezahlung, wie, nicht einschränkend angeführt, zum Beispiel Debitkarten oder Gutscheine, umfasst. Außerdem wird noch allgemein festgehalten, dass die Dienstapplikation nicht nur den Programmcode, der im Secure-Element ausgeführt wird, umfassen kann, sondern auch zumindest die zugehörigen sicherheitsrelevanten Daten, die im dafür vorgesehenen Speicherbereich des Secure-Elements abgelegt sind.

Entspricht der im E-Wallet freigeschaltete Dienst dem vom zweiten Secure-Element angebotenen Dienst, so kann das mobile Endgerät auf einfache Weise über den Server, für den von zweiten Secure-Element zur Verfügung gestellten Dienst, freigeschaltet werden. In diesem Fall ist die Bedienbarkeit der Personalisierung und/oder Provisionierung besonders einfach, da der Dienst auf dem zweiten Secure-Element mit dem im E-Wallet zu installierenden Dienst identisch ist. Somit entspricht dies der Übertragung der Benutzerberechtigung vom zweiten Secure-Element auf das mobile Endgerät mittels der Authentifizierung über den Server. Dies kann vorteilhafterweise die Möglichkeit bieten, mehrere auf verschiedenen Medien bereits verfügbare Dienste, in einem E-Wallet zur Verfügung zu stellen.

Als günstig kann sich die Verwendung eines zweiten Secure-Elements, das ein Bestandteil einer kontaktlosen kontaktlosen Zahlungskarte, insbesondere Kreditkarte oder Debit-Karte, ist, anhand deren Daten der Benutzer authentifiziert werden kann, erweisen. Da der Benutzer für den Erwerb einer kontaktlosen Zahlungskarte bereits eine Authentifizierung durchlaufen haben muss, besteht die Möglichkeit diese bereits durchlaufene Authentifizierung als Grundlage für eine wiederholte Authentifizierung des Benutzers zu verwenden. Insbesondere dann, wenn die Daten, die zur Grundlage der Authentifizierung herangezogen werden, durch ein Geheimnis, zum Beispiel eine PIN (Personal Identification Number) geschützt sind, kann dies eine besonders vorteilhafte Anwendung der Erfindung darstellen.

Hat das zweite Secure-Element ein Protokoll zur Authentifizierung, insbesondere Mastercard's Chip Authentication Program oder VISA's Dynamic Passcode Authentication, das beim Verfahren zum Freischalten des Dienstes befolgt wird, implementiert, kann dies unter Umständen eine besonders zuverlässige und gegen Manipulation geschützte Authentifizierung des Benutzers gewährleisten.

Ist das zweite Secure-Element ein Bestandteil eines kontaktlosen elektronischen Identifikationsmittels, insbesondere elektronischer Reisepass oder elektronischer Personalausweis, anhand dessen Daten der Benutzer authentifiziert werden kann, kann dies eine besonders sichere Form der Authentisierung sein. Denn die kontaktlosen elektronischen Identifikationsmittel sind für den Zweck der Identifikation gedacht, die normalerweise Grundlage jeder Authentifizierung bildet.

Erfolgt die Authentifizierung des Benutzers durch eine bereits freigeschaltete Dienstapplikation im ersten Secure Element, um im selben Secure Element die Dienstapplikation zu provisionieren und/oder zu personalisieren, um den Dienst im E-Wallet (6) freizuschalten, kann dies eine weitere Möglichkeit der Authentifizierung darstellen.

Hat die bereits freigeschaltete Dienstapplikation ein Protokoll zur Authentifizierung, insbesondere Mastercard's Chip Authentication Program oder VISA's Dynamic Passcode Authentication, implementiert, das beim Verfahren zum Freischalten des Dienstes verwendet wird, kann dies unter Umständen nochmals höhere Sicherheit bei der Authentifizierung des Benutzers gewährleisten.

In der Figur ist beispielsweise der Erfindungsgegenstand anhand eines Ausführungsbeispiels näher dargestellt. Es wird eine Vorrichtung mit einem mobilen Endgerät, mit einem Personalisierungsserver und mit einem vom mobilen Endgerät unabhängigen Secure-Element gezeigt.

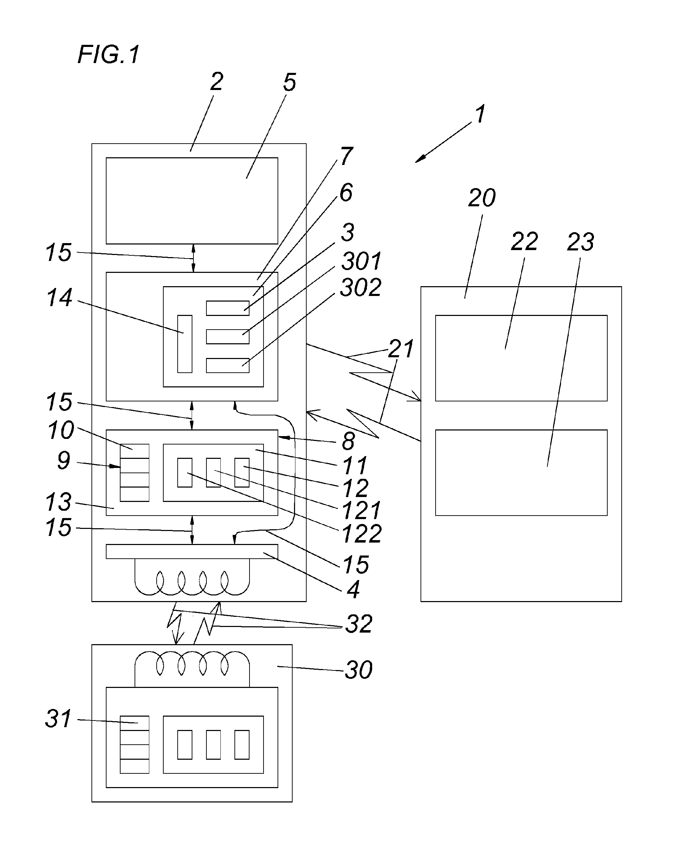

Von der nach Fig. 1 dargestellten Vorrichtung 1 dient das mobile Endgerät 2, nämlich ein Mobiltelefon, zur Ausführung eines Dienstes 3 für eine kontaktlose Bargeldtransaktion. Das mobile Endgerät 2 ist mit einer NFC-Einrichtung 4 ausgestattet, um damit ein kontaktloses Bezahlen zu ermöglichen. Zudem weist dieses Endgerät 2 eine als Touchscreen ausgeführte Anzeige 5 auf, um als Eingabegerät verwendet zu werden. Auf dem Display wird dem Benutzer außerdem auch eine Anwendung ("App"), das E-Wallet 6 bzw. die elektronische Geldbörse, angezeigt. Das E-Wallet 6 wird im Hauptprozessor der Recheneinheit 7 des mobilen Endgeräts 2 ausgeführt, und zeigt dem Benutzer mehrere verfügbare Dienste 3, 301 und 302 an.

Diese Dienste 3, 301 und 302 können sich im Allgemeinen als ein kontaktloses Bezahlen mit Kreditkarte, EC Karte oder dergleichen unter Zuhilfenahme der NFC-Einrichtung 4 ausprägen.

Aufgrund bekannter sicherheitstechnischer Bedenken bedarf es eines Secure-Elements 8 im Mobiltelefon 2. Ein Secure-Element 8 stellt unter anderem im Allgemeinen sicheren Speicher 9 für sicherheitskritische Daten 10, kryptografische Operationen und eine sichere Umgebung 11 zur Ausführung von Programmcode zur Verfügung.

Um den erhöhten Sicherheitsanforderungen gerecht zu werden, greift bekanntermaßen jeder Dienst 3, 301 und 302 im E-Wallet 6 auf seine zugehörige Dienstapplikation 12, 121 und 122 im Secure-Element 8 zu, das sich im mobilen Endgerät 2 befindet. Dieses Secure-Element 8 ist Teil der SIM-Karte 13 des mobilen Endgeräts 2, kann aber auch durch eine in das mobile Endgerät 2 eingesteckte uSD Karte oder einen integrierten Schaltkreis, der Bestandteil des mobilen Endgeräts 2 ist, ausgebildet sein, was nicht näher dargestellt worden ist.

Dazu steuert der Benutzer über Anzeige 5 und Eingabegerät den Dienst 3 im E-Wallet 6, der seinerseits die Dienstapplikation 12 im Secure-Element 8 ansteuert. Die Dienstapplikation 12 im Secure-Element 8 führt dementsprechend die notwendigen sicherheitsrelevanten Operationen aus, unter anderem Generierung und Verifikation von digitalen Signaturen. Die Authentifizierung während des Bezahlvorgangs, auch Mobile-Payment genannt, erfolgt dann bekanntermaßen gegenüber einem hier nicht näher dargestellten kontaktlosen Terminal mit zugehörigem Backend-System. Die Kommunikation zwischen Dienstapplikation 12 im Secure-Element 8 des mobilen Endgeräts 2 kann direkt mit dem kontaktlosen Terminal über die NFC-Einrichtung 4 erfolgen. Sicherheitsrelevante Daten 10, wie geheime Schlüssel etc., im Secure-Element 8 werden über diese NFC-Einrichtung 4 nicht übertragen.

Die Erfindung zeichnet sich nun gegenüber dem Stand der Technik aus, dass die Dienste 3, 301 und 302 im E-Wallet 6 bzw. die zugehörige Dienstapplikation 12, 121 und 122 im Secure-Element 8 noch nicht personalisiert bzw. provisioniert sind.

Erst durch die Personalisierung bzw. Provisionierung ist eine Zuordnung einer Identität zu der Dienstapplikation 12 im Secure-Element 8 möglich. Diese Zuordnung kann, wie dem Fachmann bekannt, beispielsweise durch Generierung eines asymmetrischen Schlüsselpaars im Secure-Element 8 erfolgen. Ist der öffentliche Schlüssel dieses Schlüsselpaars von einer vertrauenswürdigen Einheit, zum Beispiel dem Personalisierungsserver 20, durch eine digitale Signatur als dem Benutzer zugehörig bestätigt, können Signaturen, die mit dem geheimen Schlüssel des Schlüsselpaars erstellt wurden, auf ihre Richtigkeit überprüft werden.

Damit kann das E-Wallet 6 ohne Einschränkungen bzw. Sicherheitsmaßnahmen frei angeboten, von jedem Benutzer auf sein mobiles Endgerät 2 geladen bzw. auch installiert werden. Durch die noch fehlende Personalisierung bzw. Provisionierung ist aber eine Verwendung der Dienste 3, 301 und 302 im E-Wallet 6 nicht möglich.

Trotz der freien Verfügbarkeit des E-Wallet 6 kann diese App daher ohne Sicherheitsbedenken genutzt werden, weil sicherheitsrelevante Daten 10 nicht Bestandteil des E-Wallet 6 bzw. des Dienstes 3 im E-Wallet 6 sind. Die sicherheitsrelevanten Daten 10 werden während der Personalisierung und/oder Provisionierung mittels der Dienstapplikation 12 im Secure-Element 8 eingebracht, und sind aufgrund der Funktionsweise des Secure-Elements 8 vor unberechtigtem Zugriff geschützt.

Um sich mit solch einer Vorgehensweise gegenüber dem Stand der Technik dennoch mit besonderer Sicherheit abzuheben und um damit Benutzungsbedenken sicher zu überwinden, wird erfindungsgemäß vorgeschlagen, dass Personalisierung und/oder Provisionierung der Dienstapplikation 12 erst nach erfolgreicher Authentifizierung des Benutzers erfolgt, und zwar durch den Server 20, der den Benutzer auf Identität überprüft hat. Zudem muss diese Authentifizierung über Daten erfolgen, die von einem Secure-Element 8 oder 30, stammen, auf dessen sicherheitsrelevanten Daten 10 oder 31 der Benutzer keinen Zugriff hat. Stammen die Daten zur Authentifizierung von ersten Secure-Element 8, kann eine bereits personalisierte und/oder provisionierte Dienstapplikation 122 verwendet werden, um die Authentifizierung durchzuführen.

Um die Sicherheit nochmals zu erhöhen kann die Authentifizierung des Benutzers über Daten erfolgen, die von einem zweiten, nicht dem Mobiltelefon 2 zugeordneten Secure-Element 30, stammen, auf dessen sicherheitsrelevanten Daten 31 der Benutzer ebenso keinen Zugriff hat. Durch die Kommunikation mit diesem zweiten Secure-Element 30 über die NFC-Einrichtung 4 des mobilen Endgeräts 2 kann außerdem eine sichere Trennung zwischen Mobiltelefon 2 und zweiten Secure-Element 30 gewährleistet werden.

Zum besseren Verständnis des erfindungsgemäßen Verfahrens wird beispielsweise ein möglicher Ablauf anhand der Figur näher erklärt. Das Verfahren zum Freischalten eines Dienstes 3 im E-Wallet 6 beginnt, indem der Benutzer einen Dienst 3 auswählt, der noch nicht freigeschaltet wurde.

Bei der Auswahl des Dienstes 3 kann eine optionale Angebotsbeschreibung 14, die auf dem mobilen Endgerät 2 für den Benutzer dargestellt wird, die Funktion des Dienstes 3 erklären und so dem Benutzer bei seiner Auswahl unterstützen.

Die Auswahl dieses Dienstes 3 wird an einen Personalisierungs- bzw. Provisionierungsserver 20 übermittelt, der üblicherweise über die Mobilfunkschnittstelle 21 mit dem mobilen Endgerät 2 verbunden ist.

Um die notwendige Voraussetzung, um den Dienst 3 sicher freizuschalten, zu erfüllen, erhält der Benutzer die Aufforderung des Servers 20 sich zu authentifizieren. Diese Authentifizierung wird erfindungsgemäß den hohen Sicherheitsanforderungen gerecht, in dem diese Authentifizierung über die NFC-Einrichtung 4 des mobilen Endgeräts 2 mit einem zweiten, vom mobilen Endgerät 2 unabhängigen Secure-Element 30 erfolgt. Während dieser Authentifizierung des Benutzers wird erfindungsgemäß der ausgewählte Dienst signiert, um eine eindeutige Zuordnung zwischen Benutzer und ausgewählten Dienst zu gewährleisten.

Die Authentifizierung kann, falls vom zweiten Secure-Element 30 unterstützt, beispielsweise entsprechend Mastercard's Chip Authentication Program, VISA's Dynamic Passcode Authentication oder dergleichen, durchgeführt werden. Wie für den Fachmann leicht nachvollziehbar ist, wird in dem vorgeschlagenen Verfahren, bei Verwendung eines der erwähnten Protokolle, naheliegenderweise das Einmalkennwort bzw. die Antwort auf eine Anfrage (challenge-response) nicht angezeigt, sondern diese an den Personalisierungsserver 20 übertragen.

Über das Nahfeld 32, die nicht näher spezifizierten internen Schnittstellen 15 des mobilen Endgeräts 2 und die Mobilfunkstrecke 21 erfolgt die Übertragung der Authentifizierungsdaten zur Überprüfung an den Personalisierungs- bzw. Provisionierungsserver 30.

Ist die Validierung der Identität des Benutzers in der zugehörigen Komponente 22 am Server erfolgreich, erfolgt die Personalisierung und/oder Provisionierung der Dienstapplikation 12 im ersten Secure-Element 8 des mobilen Endgeräts 2 durch die dafür zuständige Komponente 23 des Servers.

Damit ist der Dienst 3 im E-Wallet 6 des mobilen Endgeräts 2 auf sichere weise freigeschaltet und dem Benutzer zugeordnet.

Dies kann auch für die anderen Bezahldienste 301 und 302 erfolgen, die erfindungsgemäß über ein zentrales E-Wallet 6 verwaltet werden, was zu einer einfachen Handhabbarkeit des bargeldlosen Bezahlvorgangs führt.

## Patentansprüche

1. Verfahren zum Freischalten mindestens eines Dienstes (3) im E-Wallet (6), ausgeführt auf einem mobilen Endgerät (2), für eine kontaktlose Transaktion, insbesondere einen kontaktlosen Bezahlvorgang, wobei das mobile Endgerät (2) eine NFC-Einrichtung (4), ein erstes Secure-Element (8) und das E-Wallet (6) aufweist, dessen Dienst (3) zumindest auf eine Dienstapplikation (12) im Secure-Element (8) zugreift, **dadurch gekennzeichnet, dass** es zumindest folgende Schritte umfasst:
- Anzeige mindestens eines zur Verfügung stehenden Dienstes (3) im E-Wallet (6),
- Auswahl eines Dienstes (3) durch den Benutzer und Übermittlung der Auswahl an einen Server (20), der mit dem mobilen Endgerät (2) über die Mobilfunkschnittstelle (21) verbunden ist,
- Authentifizieren des Benutzers des mobile Endgeräts (2) über ein Secure-Element (8 oder 30) nach Auswahl des Dienstes (3),
- Übertragung der Authentifizierungsdaten des Benutzers an den Server (20),
- Überprüfen der empfangenen Authentifizierungsdaten am Server (20) um die Identität des Benutzers zu validieren,
- Personalisierung und/oder Provisionierung der Dienstapplikation (12) im ersten Secure-Element (8) des mobilen Endgeräts (2) für den Benutzer durch den Server (20), um den Dienst (3) im E-Wallet (6) freizuschalten.

2. Verfahren nach Anspruch 1, **dadurch gekennzeichnet, dass** als erstes Secure-Element (8) die SIM-Karte (13) des mobilen Endgeräts (2), eine in das mobile Endgerät (2) eingesteckte Micro-SD Karte oder ein integrierter Schaltkreis, der Bestandteil des mobilen Endgeräts (2) ist, verwendet wird.

3. Verfahren nach Anspruch 1 oder 2, **dadurch gekennzeichnet, dass** die Aufforderung zur Authentisierung über das E-Wallet (6) des mobilen Endgeräts (2) erfolgt.

4. Verfahren nach Anspruch 1, 2 oder 3, **dadurch gekennzeichnet, dass** die Aufforderung zur Authentisierung vom Server (20) an das mobile Endgerät (2) gesendet wird.

5. Verfahren nach einem der Ansprüche 1 bis 4, **dadurch gekennzeichnet, dass** die Funktion des Dienstes (3) durch eine Angebotsbeschreibung (14) auf dem mobilen Endgerät (2) dem Benutzer visualisiert wird.

6. Verfahren nach einem der Ansprüche 1 bis 5, **dadurch gekennzeichnet, dass** bei der Authentifizierung des Benutzers der ausgewählte Dienst (3) signiert wird.

7. Verfahren nach einem der Ansprüche 1 bis 6, **dadurch gekennzeichnet, dass** die Authentifizierung des Benutzers eine Aufforderung an den Benutzer sich über die NFC-Einrichtung (4) des mobilen Endgeräts (2) mit einem zweiten, vom mobilen Endgerät (2) unabhängigem Secure-Element (30) zu authentifizieren, aufweist.

8. Verfahren nach einem der Ansprüche 1 bis 7, **dadurch gekennzeichnet, dass** der im E-Wallet (6) freigeschaltet Dienst (3) dem vom zweiten Secure-Element (30) angebotenen Dienst entspricht.

9. Verfahren nach einem der Ansprüche 1 bis 8, **dadurch gekennzeichnet, dass** das zweite Secure-Element (30) ein Bestandteil einer kontaktlosen Zahlungskarte, insbesondere Kreditkarte oder Debit-Karte, ist, anhand deren Daten der Benutzer authentifiziert werden kann.

10. Verfahren nach Anspruch 9, **dadurch gekennzeichnet, dass** das zweite Secure-Element (30) ein Protokoll zur Authentifizierung, insbesondere Mastercard's Chip Authentication Program oder VISA's Dynamic Passcode Authentication, implementiert hat, das beim Verfahren zum Freischalten des Dienstes (3) verwendet wird.

11. Verfahren nach einem der Ansprüche 1 bis 7, **dadurch gekennzeichnet, dass** das zweite Secure-Element (30) ein Bestandteil eines kontaktlosen elektronischen Identifikationsmittels, insbesondere elektronischer Reisepass oder elektronischer Personalausweis, ist, anhand dessen Daten der Benutzer authentifiziert werden kann.

12. Verfahren nach einem der Ansprüche 1 bis 6, **dadurch gekennzeichnet, dass** die Authentifizierung des Benutzers durch eine bereits freigeschaltete Dienstapplikation (122) im ersten Secure Element (8) erfolgt, um im selben Secure Element (8) die Dienstapplikation (12) zu provisionieren und/oder zu personalisieren, um den Dienst (3) im E-Wallet (6) freizuschalten.

13. Verfahren nach dem Anspruch 12, **dadurch gekennzeichnet, dass** die bereits freigeschaltete Dienstapplikation (122) ein Protokoll zur Authentifizierung, insbesondere Mastercard's Chip Authentication Program oder VISA's Dynamic Passcode Authentication, implementiert hat, das beim Verfahren zum Freischalten des Dienstes (3) verwendet wird.
